(19) Europäisches Patentamt
European Patent Office
Office européen des brevets

(11) EP 4 736 644 A1

(12) # EUROPEAN PATENT APPLICATION
published in accordance with Art. 153(4) EPC

(43) Date of publication:
**06.05.2026 Bulletin 2026/19**

(21) Application number: **24831356.1**

(22) Date of filing: **26.03.2024**

(51) International Patent Classification (IPC):
***A01N 33/12*** (2006.01) ***A01N 31/00*** (2006.01)
***A01N 31/02*** (2006.01) ***A01N 43/40*** (2006.01)
***A01P 1/00*** (2006.01) ***A01P 3/00*** (2006.01)
***C11D 1/14*** (2006.01) ***C11D 1/29*** (2006.01)
***C11D 1/62*** (2006.01) ***C11D 3/26*** (2006.01)
***C11D 3/28*** (2006.01) ***C11D 3/48*** (2006.01)

(52) Cooperative Patent Classification (CPC):
**A01N 31/00; A01N 31/02; A01N 33/12; A01N 43/40; A01P 1/00; A01P 3/00; C11D 1/14; C11D 1/29; C11D 1/62; C11D 3/26; C11D 3/28; C11D 3/48**

(86) International application number:
**PCT/JP2024/011912**

(87) International publication number:
**WO 2025/004479 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108096**

(71) Applicant: **Kao Corporation**
**Tokyo 103-8210 (JP)**

(72) Inventors:
- **SAEKI Shiho**
  **Tokyo 103-8210 (JP)**
- **KIJITORI Hiroki**
  **Tokyo 103-8210 (JP)**
- **KOTERA Takanori**
  **Tokyo 103-8210 (JP)**

(74) Representative: **Hoffmann Eitle**
**Patent- und Rechtsanwälte PartmbB**
**Arabellastraße 30**
**81925 München (DE)**

(54) **BIOFILM REMOVER COMPOSITION**

(57) Provided are a biofilm removing agent composition and a method for removing a biofilm using the same excellent in the removability of a biofilm adhering to an object article, especially a textile product.

A biofilm removing agent composition containing the following components (a) and (b),

component (a): one or more compounds selected from (a1) a quaternary ammonium salt having a long-chain alkyl group represented by the general formula (a1), and (a2) a bispyridinium compound, and
component (b): an anionic surfactant.

EP 4 736 644 A1

## Description

Field of the Invention

The present invention relates to a biofilm removing agent composition and a method for removing a biofilm.

Background of the Invention

Once bacteria adhere to object articles, the bacteria adhering to the object articles grow and form biofilms. Biofilms are also called biological films or slime, and generally refer to three-dimensional structures formed from macromolecular compounds such as polysaccharides, proteins, and nucleic acids, or the like produced by microorganisms such as bacteria or the like to envelop microorganisms when microorganisms adhere to and grow on the surface of matter.

Biofilms also pose problems for individual ordinary people in various situations. For example, in wet environments in households such as the kitchen, sink, areas near bathroom drains, and others, they cause unpleasant slimy stains, foul odors, or the like. Further, not only in these direct water environment areas, but also in situations where water, dampness, and dirt coexist, such as scratches on cutting boards, the inside of dishwashing sponges, washing tubs, and further, fabric products such as clothing, dishcloths, rags, bath mats, or the like, and others, biofilms are more likely to be formed and cause problems.

Further, detergents formulated with various types of surfactants are widely used for washing textile products such as clothing or the like. In recent years, as people have become more aware of hygiene, concern about bacteria or viruses adhering to the surfaces of textile products has also been increasing. Therefore, people are undertaking extra efforts or costs to do their washing, such as soaking socks or sweat-stained clothing prone to bacterial growth in detergent liquids for some time, using disinfectants or bleaching agents together with detergents for textile products, or the like.

US-B 5728667 discloses a germicidal light-duty dishwashing detergent composition in either a gel or liquid form, which contains a dioctyl dimethylammonium salt and an alkyl ether carboxylate.

Summary of the Invention

Biofilms adhering to object articles, especially textile products are very difficult to remove because macromolecules constituting biofilms act as a protection barrier that guards bacteria from various types of base agents.

The present invention provides a biofilm removing agent composition and a method for removing a biofilm using the same excellent in the removability of a biofilm adhering to an object article, especially a textile product.

The present invention relates to a biofilm removing agent composition containing the following components (a) and (b),

component (a): one or more compounds selected from (a1) a compound represented by the following general formula (a1) (hereinafter referred to as component (a1)) and (a2) a bispyridinium compound (hereinafter referred to as component (a2)),

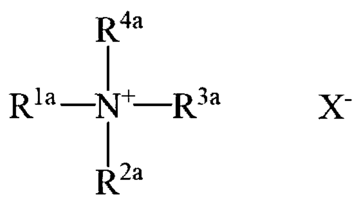

(a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and
component (b): an anionic surfactant.

Further, the present invention relates to a method for removing a biofilm including bringing the biofilm removing agent composition of the present invention or a treatment liquid which is an aqueous dilute solution of the composition into contact with an object article where the biofilm exists.

Further, the present invention relates to a method for removing a biofilm including bringing a treatment liquid into contact with an object article where the biofilm exists, the treatment liquid containing the above components (a) and (b).

Further, the present invention relates to use of a composition containing the above components (a) and (b) for

removing a biofilm from an object article to which the biofilm adheres.

The present invention provides a biofilm removing agent composition and a method for removing a biofilm using the same excellent in the removability of a biofilm adhering to an object article, especially a textile product.

Embodiments of the Invention

The reason why the biofilm removing agent composition and the method for removing a biofilm using the same of the present invention are excellent in the removability of a biofilm adhering to an object article, especially a textile product is not wholly certain, but is inferred to be as follows.

Biofilms are very difficult to remove because extracellular polysaccharides, one type of the macromolecules constituting biofilms, act as a protection barrier that guards bacteria from various types of base agents. It seems that the present invention enables biofilm removal by loosening the closely-packed structures of these extracellular polysaccharides and dispersing them using a specific cationic surfactant as component (a) and an anionic surfactant as component (b) together. Specifically, it seems that the biofilm removing agent composition of the present invention using a specific cationic surfactant as component (a) and an anionic surfactant as component (b) together forms a loose ion complex in which (a) and (b) do not counteract each other, allowing the ion complex to act upon the extracellular polysaccharides when a surplus of the anionic surfactant which does not form the ion complex disperses the extracellular polysaccharides, thereby enabling the removal of the extracellular polysaccharides. Preferably, if the biofilm removing agent composition of the present invention contains a specific cationic surfactant as component (a) and an anionic surfactant as component (b) at a mass ratio (a)/(b) of less than 1, a more excellent biofilm removal effect can be obtained.

Note that the present invention is not limited to the above acting mechanism.

[Biofilm removing agent composition]

<Component (a)>

The biofilm removing agent composition of the present invention contains, as component (a), one or more compounds selected from (a1) a compound represented by the following general formula (a1) (hereinafter referred to as component (a1)) and (a2) a bispyridinium compound (hereinafter referred to as component (a2)),

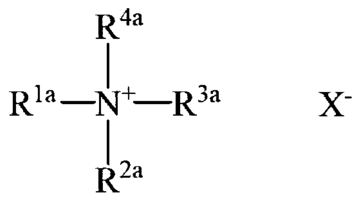

(a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion.

In the compound of the general formula (a1), which is component (a1), $R^{1a}$ and $R^{2a}$ are each independently a linear or branched alkyl group and preferably a linear alkyl group with 6 or more and preferably 8 or more, and 12 or less and preferably 10 or less carbons from the viewpoint of biofilm removal. $R^{1a}$ and $R^{2a}$ are preferably the same as each other from the viewpoint of biofilm removal.

$R^{3a}$ and $R^{4a}$ are each independently a linear or branched alkyl group with 1 or more and 3 or less carbons. Examples of the alkyl group with 1 or more and 3 or less carbons include a group selected from a methyl group, an ethyl group, and a propyl group.

$X^-$ is an anion. The anion is preferably a halogen ion or an alkyl sulfate ion with 1 or more and 3 or less carbons from the viewpoint of biofilm removal. Examples of the halogen ion include, for example, a chloride ion, a bromide ion, or an iodide ion. $X^-$ is preferably a chloride ion from the viewpoint of biofilm removal. Further, examples of the alkyl sulfate ion with 1 or more and 3 or less carbons include, for example, a methyl sulfate ion, an ethyl sulfate ion, or a propyl sulfate ion.

A single type or a combination of two or more types of component (a1) may be used.

Component (a2) is a bispyridinium compound.

Examples of the bispyridinium compound include, for example, compounds described in GB-B 1533952, JP-A S52-105228, and WO-A 2014-100807, or the like. Specifically, the bispyridinium compound is preferably one or more selected from a compound represented by the following general formula (a21) and a compound represented by the following general formula (a22) from the viewpoint of biofilm removal,

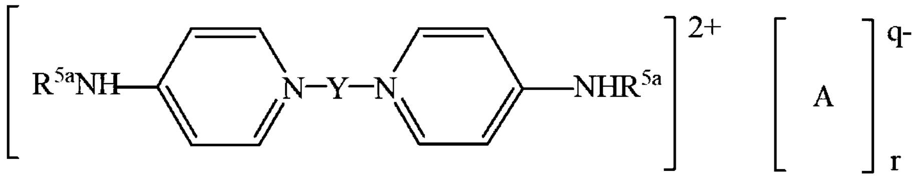

(a21)

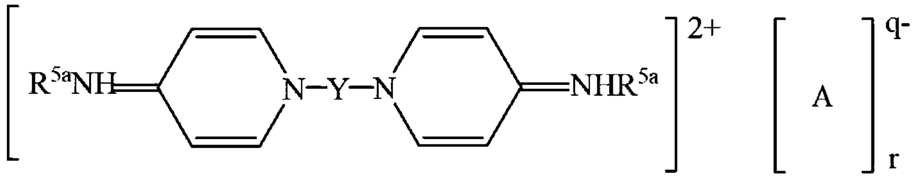

(a22)

wherein Y is an alkylene or alkenylene group having 4 to 18 carbon atoms, each $R^{5a}$ represents an alkyl group having 6 to 18 carbon atoms, a cycloalkyl group having 5 to 7 carbon atoms, or a phenyl group which may be or may not be substituted with a halogen, A is an anion, q is 1 or 2, r is 1 or 2, and $q \times r = 2$.

A is a monovalent or divalent anion, and may be an anion from a compound such as, for example, a chloride, a bromide, a phosphate, an orthosilicate, an organic acid, for example, an organic acid having the formula $R^{6a}$-COO- or an alkyl (with 1 or more and 40 or less carbons) sulfonic acid, or the like. Here, $R^{6a}$ is hydrogen, hydroxyl, or an alkyl group with 1 or more and 40 or less carbons.

Examples of the organic acid corresponding to the anion of A include, for example, acetic acid, propionic acid, phosphoric acid, glycolic acid, pyruvic acid, oxalic acid, maleic acid, malonic acid, succinic acid, fumaric acid, tartaric acid, citric acid, benzoic acid, cinnamic acid, mandelic acid, methanesulfonic acid, ethanesulfonic acid, p-toluenesulfonic acid, glycyrrhizic acid, salicylic acid, stearic acid, phosphonic acid, trifluoroacetic acid, cyanoacetic acid, 4-cyanobenzoic acid, 2-chlorobenzoic acid, 2-nitrobenzoic acid, phenoxyacetic acid, benzenesulfonic acid, and others.

A preferable bispyridinium compound is the compound of the general formula (a22) and further octenidine dihydrochloride (a compound of the general formula (a22) in which each $R^{5a}$ is an n-octyl group, Y is an n-decenyl group, A is Cl, q is 1, and r is 2, CAS number 70775-75-6) from the viewpoint of biofilm removal.

A single type or a combination of two or more types of component (a2) may be used.

Component (a) is preferably component (a1), more preferably one or more compounds selected from a dioctyl methyl ethyl ammonium salt and a dioctyl dimethyl ammonium salt, and further preferably a dioctyl dimethyl ammonium salt from the viewpoint of biofilm removal.

<Component (b)>

The biofilm removing agent composition of the present invention contains an anionic surfactant as component (b).

Component (b) is preferably an anionic surfactant including one or more compounds selected from (b1) a compound represented by the following general formula (b1) (hereinafter referred to as component (b1)), (b2) a compound represented by the following general formula (b2) (hereinafter referred to as component (b2)), and (b3) an internal olefin sulfonate with 14 or more and 20 or less carbons (hereinafter referred to as component (b3)) from the viewpoint of biofilm removal,

$$R^{16}\text{-O-}[(PO)_p/(EO)_q]\text{-}SO_3M \qquad \text{(b1)}$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion, and

$$R^{2b}\text{-B-}SO_3M \qquad \text{(b2)}$$

wherein in the general formula (b2), $R^{2b}$ represents an alkyl group with 3 or more and 21 or less carbons, B represents a benzene ring, M is a hydrogen ion, an alkali metal ion, an alkaline earth metal ion (1/2 atom), an ammonium ion, or an organic ammonium ion, and the sulfonic acid group is bonded at the ortho position, meta position, or para position relative to $R^{2b}$ bonded to B.

In the compound of the general formula (b1) of component (b1), $R^{1b}$ is a hydrocarbon group, preferably a linear or branched alkyl group or a linear or branched alkenyl group, more preferably a linear or branched alkyl group, and further preferably a linear alkyl group with 8 or more, preferably 10 or more, and more preferably 12 or more, and 22 or less, preferably 20 or less, more preferably 18 or less, and further preferably 16 or less carbons from the viewpoint of biofilm removal.

p is an average number of added moles of PO, and is a number of 0 or more, preferably 0.1 or more, more preferably 0.2 or more, further preferably 0.3 or more, furthermore preferably 0.5 or more, furthermore preferably 1 or more, and furthermore preferably 2 or more, and 10 or less, preferably 8 or less, more preferably 5 or less, further preferably 3 or less, and furthermore preferably 2.5 or less from the viewpoint of biofilm removal.

q is an average number of added moles of EO, and is a number of 0 or more, preferably 0.5 or more, more preferably 1 or more, and further preferably 2 or more, and 25 or less, preferably 8 or less, more preferably 5 or less, further preferably 3 or less, and furthermore preferably 1.5 or less from the viewpoint of biofilm removal.

M is a hydrogen ion, an alkali metal ion, an alkaline earth metal ion (1/2 atom), an ammonium ion, or an organic ammonium ion. Examples of the alkali metal ion include a sodium ion or a potassium ion, examples of the alkaline earth metal ion (1/2 atom) include a calcium ion or a magnesium ion, and examples of the organic ammonium ion include an alkanolamine having 1 to 3 alkanol groups with 2 or 3 carbons (for example, monoethanolamine, diethanolamine, triethanolamine, triisopropanolamine, or the like).

In the compound of the general formula (b2) of component (b2), $R^{2b}$ represents an alkyl group with 3 or more, preferably 6 or more, more preferably 8 or more, further preferably 10 or more, and furthermore preferably 12 or more, and 21 or less, preferably 18 or less, more preferably 16 or less, and further preferably 14 or less carbons from the viewpoint of biofilm removal.

B represents a benzene ring, and the sulfonic acid group ($-SO_3M$) is bonded at the ortho position, meta position, or para position relative to $R^{2b}$ bonded to B.

M is a hydrogen ion, an alkali metal ion, an alkaline earth metal ion (1/2 atom), an ammonium ion, or an organic ammonium ion. Examples of the alkali metal ion include a sodium ion or a potassium ion, examples of the alkaline earth metal ion (1/2 atom) include a calcium ion or a magnesium ion, and examples of the organic ammonium ion include an alkanolamine having 1 to 3 alkanol groups with 2 or 3 carbons (for example, monoethanolamine, diethanolamine, triethanolamine, triisopropanolamine, or the like).

Component (b3) is an internal olefin sulfonate. The carbon number of the internal olefin sulfonate in component (b3) is preferably 14 or more and more preferably 16 or more, and preferably 24 or less, more preferably 20 or less, and further preferably 18 or less from the viewpoint of biofilm removal. The carbon number of the internal olefin sulfonate in component (b3) represents the carbon number of an internal olefin that forms a covalent bond with a sulfonic acid salt.

The internal olefin sulfonate of component (b3) is sulfonates obtained by sulfonating, neutralizing, and hydrolyzing internal olefins (olefins having a double bond inside the olefin chains) with preferably 10 or more and more preferably 14 or more and preferably 20 or less and more preferably 18 or less carbons as raw materials. The internal olefins also include those which contain minute amounts of so-called alpha-olefins (hereinafter also referred to as $\alpha$-olefins) in which the position of a double bond is present at position 1 of the carbon chains. Further, when the internal olefins are sulfonated, $\beta$-sultones are quantitatively produced, and part of the $\beta$-sultones are changed to $\gamma$-sultones and olefin sulfonic acids, and these are further converted into hydroxy alkane sulfonates and olefin sulfonates in the neutralization/hydrolysis process (for example, J. Am. Oil Chem. Soc. 69, 39 (1992)). Here, the obtained hydroxy alkane sulfonates and olefin sulfonates respectively have a hydroxy group inside the alkane chains and a double bond inside the olefin chains. Further, the obtained product is primarily a mixture of these and may sometimes also partially contain minute amounts of hydroxy alkane sulfonates having a hydroxy group at the end of the carbon chains or olefin sulfonates having a double bond at the end of the carbon chains.

As used herein, each of these products and a mixture of them are collectively referred to as the internal olefin sulfonate (component (b3)). Further, the hydroxy alkane sulfonates are referred to as hydroxy species of the internal olefin sulfonate (hereinafter also referred to as HAS species), and the olefin sulfonates are referred to as olefin species of the internal olefin sulfonate (hereinafter also referred to as IOS species).

Note that a mass ratio between HAS species and IOS species of the compound in component (b3) can be measured by a high-performance liquid chromatography mass spectrometer (hereinafter abbreviated as HPLC-MS). Specifically, the mass ratio can be determined from the HPLC-MS peak areas of component (b3).

Examples of a salt of the internal olefin sulfonate include an alkali metal salt, an alkaline earth metal (1/2 atom) salt, an ammonium salt, or an organic ammonium salt. Examples of the alkali metal salt include a sodium salt or a potassium salt. Examples of the organic ammonium salt include an alkanolammonium salt with 2 or more and 6 or less carbons including an alkanolamine.

As is clear from the above producing method, the sulfonic acid group in the internal olefin sulfonate of component (b3) is present inside the carbon chain of the internal olefin sulfonate, i.e., an olefin chain or an alkane chain, and component (b3) may sometimes also partially contain minute amounts of compounds in which a sulfonic acid group is

present at the end of the carbon chains.

A content of an internal olefin sulfonate in which a sulfonic acid group is present at position 5 or more and preferably position 5 or more and 9 or less in component (b3) is preferably 5 mass% or more, more preferably 10 mass% or more, further preferably 15 mass% or more, and furthermore preferably 20 mass% or more, and preferably 60 mass% or less, more preferably 55 mass% or less, further preferably 45 mass% or less, and furthermore preferably 40 mass% or less from the viewpoint or biofilm removal.

A mass ratio of a content of an internal olefin sulfonate in which a sulfonic acid group is present at position 2 or more and 4 or less [hereinafter sometimes referred to as (IO-1S)] to a content of the internal olefin sulfonate in which a sulfonic acid group is present at position 5 or more and preferably position 5 or more and 9 or less [hereinafter sometimes referred to as (IO-2S)] in component (b3), (IO-1S)/(IO-2S), is preferably 0.5 or more, more preferably 0.8 or more, further preferably 1.0 or more, furthermore preferably 1.5 or more, furthermore preferably 2 or more, furthermore preferably 2.5 or more, furthermore preferably 3 or more, furthermore preferably 4 or more, and furthermore preferably 4.5 or more from the viewpoint of biofilm removal, and preferably 10 or less, more preferably 8 or less, and further preferably 6 or less from the viewpoint of biofilm removal.

Note that the contents of the compounds having a sulfonic acid group at different positions in component (b3) can be measured by HPLC-MS. As used herein, the contents of the compounds having a sulfonic acid group at different positions are determined as mass proportions based on the HPLC-MS peak areas of the compounds having a sulfonic acid group at their respective positions in the whole HAS species of component (b3).

In component (b3), a content of an olefin sulfonate in which a sulfonic acid group is present at position 1 in component (b3) is preferably 10 mass% or less, more preferably 7 mass% or less, further preferably 5 mass% or less, and furthermore preferably 3 mass% or less from the viewpoint of biofilm removal, and preferably 0.01 mass% or more from the viewpoints of reducing production costs and improving productivity.

The positions of a sulfonic acid group in these compounds are positions in the olefin chains or the alkane chains.

The above internal olefin sulfonate can be a mixture of hydroxy species and olefin species. A mass ratio of a content of olefin species of the internal olefin sulfonate to a content of hydroxy species of the internal olefin sulfonate in component (b3) (olefin species/hydroxy species) can be 0/100 or more and further 5/95 or more, and 50/50 or less, further 40/60 or less, further 30/70 or less, and further 25/75 or less.

Examples of an anionic surfactant other than components (b1), (b2), and (b3) include one or more selected from an α-olefin sulfonic acid, an alkane sulfonic acid, a saturated or unsaturated fatty acid, an alkyl or alkenyl ether carboxylic acid, an α-sulfo fatty acid, an N-acyl amino acid, a phosphoric acid mono or diester, a sulfosuccinic acid ester, and a salt of these.

The anionic surfactant has an alkyl group or alkenyl group with, for example, 8 or more and 22 or less carbons.

Examples of a salt of the anionic surfactant include an alkali metal salt, an alkaline earth metal (1/2 atom) salt, an ammonium salt, or an organic ammonium salt. Examples of the alkali metal salt include a sodium salt or a potassium salt. Examples of the organic ammonium salt include an alkanolammonium salt with 2 or more and 6 or less carbons including an alkanolamine.

In the biofilm removing agent composition of the present invention, a content of components (b1), (b2), and (b3) in component (b) is preferably 70 mass% or more, more preferably 80 mass% or more, and further preferably 90 mass% or more, and preferably 100 mass% or less and more preferably 100 mass% from the viewpoint of biofilm removal. The aforementioned content of components (b1), (b2), and (b3) in component (b) does not limitedly require that components (b1), (b2), and (b3) be all essential components, and component (b) only needs to contain at least any of the components.

Component (b) is preferably one or more selected from components (b1), (b2), and (b3) and more preferably one or more selected from component (b1) of the general formula (b1) in which p is 0.1 or more and component (b3) from the viewpoint of biofilm removal.

Further, from the viewpoint of biofilm removal, component (b) is preferably an anionic surfactant including one or more compounds selected from component (b1) of the general formula (b1), in which p is 0.1 or more and 10 or less and q is 0 or more and 25 or less, component (b2) of the general formula (b2), in which $R^{2b}$ has 8 or more and 18 or less carbons, and the alkyl group with 8 or more and 18 or less carbons internal olefin sulfonate of component (b3), which has 16 or more and 18 or less carbons.

A single type or a combination of two or more types of component (b) may be used. Component (b) is preferably two or more from the viewpoint of biofilm removal. Component (b) is preferably two or more including component (b1) of the general formula (b1) in which p is 0.1 or more and more preferably the two of component (b1) of the general formula (b1) in which p is 0.1 or more and component (b3) from the viewpoint of biofilm removal.

<Composition and others>

The biofilm removing agent composition of the present invention contains component (a) in the composition in an amount of preferably 0.001 mass% or more, more preferably 0.01 mass% or more, further preferably 0.1 mass% or more,

and furthermore preferably 1 mass% or more, and preferably 80 mass% or less, more preferably 70 mass% or less, further preferably 50 mass% or less, furthermore preferably 10 mass% or less, and furthermore preferably 5 mass% or less from the viewpoint of biofilm removal.

In the present invention, when the composition contains component (a1) as component (a), a chloride salt equivalent value is used as the mass of component (a1), and when the composition contains component (a2) as component (a), a hydrochloride salt equivalent value is used as the mass of component (a2).

The biofilm removing agent composition of the present invention contains component (b) in the composition in an amount of preferably 0.001 mass% or more, more preferably 0.01 mass% or more, further preferably 0.1 mass% or more, furthermore preferably 1 mass% or more, furthermore preferably 5 mass% or more, furthermore preferably 10 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 18 mass% or less from the viewpoint of biofilm removal.

In the present invention, a sodium salt equivalent value is used as the mass of component (b).

A mass ratio of a content of component (a) to a content of component (b) in the biofilm removing agent composition of the present invention, (a)/(b), is preferably 0.001 or more, more preferably 0.005 or more, further preferably 0.01 or more, furthermore preferably 0.02 or more, furthermore preferably 0.05 or more, furthermore preferably 0.1 or more, furthermore preferably 0.12 or more, and furthermore preferably 0.15 or more, and preferably 7 or less, more preferably 5 or less, furthermore preferably 4 or less, furthermore preferably 3 or less, furthermore preferably 2 or less, furthermore preferably 1.5 or less, furthermore preferably less than 1, furthermore preferably 0.99 or less, furthermore preferably 0.97 or less, furthermore preferably 0.95 or less, furthermore preferably 0.5 or less, and furthermore preferably 0.3 or less from the viewpoint of biofilm removal.

The biofilm removing agent composition of the present invention can facilitate biofilm removal if it contains, as other components, for example, a watersoluble solvent, a chelating agent, a pH adjuster, a preservative, a colorant, a fragrance, a hydrotrope agent, an anti-recontamination and dispersing agent such as a polymer or the like, an enzyme, an antibacterial agent, an antioxidant, a defoamer, and others (excluding those qualifying as components (a) and (b)).

The biofilm removing agent composition of the present invention contains water. Ion-exchanged water, tap water, purified water, or the like can be used as the water. Water can be used as the balance of the composition in such an amount that the makeup of the entire composition becomes 100 mass%.

The biofilm removing agent composition of the present invention contains water in the composition in an amount of preferably 0.1 mass% or more, more preferably 1 mass% or more, and further preferably 5 mass% or more, and preferably 99 mass% or less and more preferably 95 mass% or less.

The biofilm removing agent composition of the present invention has a pH at 25°C of preferably 1 or more, more preferably 3 or more, further preferably 5 or more, and further preferably 6 or more, and preferably 14 or less, more preferably 12 or less, and further preferably 10 or less from the viewpoint of biofilm removal. The pH is a value measured at 25°C using a glass electrode. Specifically, it is measured by the method below.

<Method for measuring pH>

A pH electrode (manufactured by SI Analytics, BlueLine 17 pH) is calibrated in advance with Reagecon pH 4.000 High Resolution Colour Coded Buffer Solution and Reagecon pH 7.000 High Resolution Colour Coded Buffer Solution using Multi-parameter Analyser C3010 manufactured by Consort, and sufficiently rinsed with ion-exchanged water. The pH electrode calibrated and washed as described above is placed in the detergent composition whose temperature has been adjusted to 25°C, and measurements are taken using AUTO HOLD mode of a pH meter until the measurement value becomes constant.

The biofilm removing agent composition of the present invention may be a biofilm removing agent composition formulated with components (a) and (b), and the composition may further be formulated with water or other components. The matters described in the biofilm removing agent composition of the present invention can be appropriately applied to this biofilm removing agent composition, and the content of each component and each mass ratio described above can be read and applied as the formulation amount of each component.

The biofilm removing agent composition of the present invention can be suitably used for textile products or hard articles and can be more preferably used for textile products.

The fibers of the textile products may be either hydrophobic fibers or hydrophilic fibers. Examples of the hydrophobic fibers include, for example, protein fibers (milk protein casein fiber, promix, or the like), polyamide fibers (nylon or the like), polyester fibers (polyester or the like), polyacrylonitrile fibers (acrylic or the like), polyvinyl alcohol fibers (vinylon or the like), polyvinyl chloride fibers (polyvinyl chloride or the like), polyvinylidene chloride fibers (vinylidene or the like), polyolefin fibers (polyethylene, polypropylene, or the like), polyurethane fibers (polyurethane or the like), polyvinyl chloride/polyvinyl alcohol copolymer fibers (Polyclar or the like), polyalkylene paraoxybenzoate fibers (benzoate or the

like), polyfluoroethylene fibers (polytetrafluoroethylene or the like), and others. Examples of the hydrophilic fibers include, for example, seed hair fibers (cotton, kapok, or the like), bast fibers (hemp, flax, ramie, cannabis, jute, or the like), vein fibers (manila hemp, sisal hemp, or the like), palm fibers, juncus, straw, animal hair fibers (wool, mohair, cashmere, camel hair, alpaca, vicuna, angora, or the like), silk fibers (domestic silk and wild silk), feather, cellulose fibers (rayon, polynosic, cupro, acetate, or the like), and others.

In the present invention, the textile products mean textiles such as woven materials, knitted materials, nonwoven fabrics, and others using the above hydrophobic fibers or hydrophilic fibers, and products obtained using them, including undershirts, T-shirts, dress shirts, blouses, slacks, hats, handkerchiefs, towels, bedding, bedding textile products (sheets, pillowcases, or the like), knitwear, socks, underwear, tights, masks, and others. Preferable textile products are woven fabrics such as woven materials, knitted materials, or the like, and woven textile products, and preferable textile products are textile products containing hydrophobic fibers from the viewpoint of biofilm removal.

Examples of the hard articles include hard articles in the living environment such as a washing machine, a washing tub, a washing machine hatch, washing machine lint filters, a washing machine drain pipe, tableware, hard articles around the kitchen, and/or the bathroom, toilet areas, floors, and others, hard articles such as gutters, water distribution pipes, food manufacturing or beverage manufacturing plants, cooling water systems such as industrial cooling towers or the like, medical devices such as endoscopes, catheters, artificial dialysis equipment, or the like, and others.

Examples of the materials of the hard articles include plastic such as polyethylene, polypropylene, or the like (including silicone resin or the like), metal, ceramic, wood, and a combination of those.

[Method for removing biofilm]

The present invention relates to a method for removing a biofilm including bringing the biofilm removing agent composition of the present invention or a treatment liquid which is an aqueous dilute solution of the composition (hereinafter also referred to as the treatment liquid of the present invention) into contact with an object article where the biofilm exists.

The treatment liquid of the present invention is prepared by diluting the biofilm removing agent composition of the present invention with water, and thus contains the above components (a) and (b).

In other words, the present invention relates to a method for removing a biofilm including bringing a treatment liquid (hereinafter also referred to as the treatment liquid of the present invention) into contact with an object article where the biofilm exists, the treatment liquid containing components (a) and (b) and water. Hereinafter, both the treatment liquid which is an aqueous dilute solution of the biofilm removing agent composition of the present invention and the treatment liquid containing components (a) and (b) and water are considered as the treatment liquid of the present invention to give an explanation.

In a preferable method of the method for removing a biofilm of the present invention, after bringing the biofilm removing agent composition of the present invention or the treatment liquid of the present invention into contact with the object article where the biofilm exists, the object article to which the biofilm removing agent composition of the present invention or the treatment liquid of the present invention adheres is wiped or rinsed with water to remove the biofilm removing agent composition of the present invention or the treatment liquid of the present invention from the object article.

A wiping method is preferably a method in which the object article is wiped with a sheet made of fibers, a textile, or the like. A rinsing method is preferably a method in which the object article to which the biofilm adheres and with which the biofilm removing agent composition of the present invention or the treatment liquid of the present invention has been brought into contact is brought into contact and rinsed with water. A specific rinsing method is preferably a method in which the object article is continuously exposed to water or a method in which the object article is immersed in water.

The method for removing a biofilm of the present invention is carried out using the biofilm removing agent composition of the present invention or the treatment liquid of the present invention, and the aspects described in the biofilm removing agent composition of the present invention can be appropriately applied thereto.

The object article in the method for removing a biofilm of the present invention is a textile product or a hard article and preferably a textile product.

The aspects of the object articles such as a textile product and a hard article are the same as the aspects described in the biofilm removing agent composition of the present invention.

Examples of a method for bringing the biofilm removing agent composition of the present invention or the treatment liquid of the present invention into contact with the object article where the biofilm exists include a method in which the biofilm removing agent composition of the present invention or the treatment liquid of the present invention is sprayed on or applied to the object article where the biofilm exists or may exist, or a method in which the object article, for example, a textile product is immersed in the biofilm removing agent composition of the present invention or the treatment liquid of the present invention. Further, the biofilm removing agent composition of the present invention or the treatment liquid of the present invention may be brought into contact with the object article via a nonwoven fabric impregnated therewith.

When the biofilm removing agent composition of the present invention or the treatment liquid of the present invention is sprayed on or applied to the object article, the biofilm removing agent composition of the present invention or the treatment liquid of the present invention may be filled into a container including a sprayer and sprayed in the form of liquid droplets or in the form of foam, or the biofilm removing agent composition of the present invention or the treatment liquid of the present invention may be poured from a container onto the object article and applied with a brush or the like.

Examples of the container including a sprayer include a manual spray device using no propellant such as a trigger-type spray container, a pump-type spray container, or the like, an aerosol using a propellant, and others.

The container including a sprayer is preferably a trigger-type spray capable of spraying the contents in the form of liquid droplets or in the form of foam, and more preferably a trigger-type spray including a mechanism for spraying the contents in the form of liquid droplets or a trigger-type spray including a mechanism for forming foam (foam forming mechanism).

When the object article, for example, a textile product is immersed in the biofilm removing agent composition of the present invention or the treatment liquid of the present invention, the object article and the biofilm removing agent composition of the present invention or the treatment liquid of the present invention may be left to stand or may be stirred during immersion. When they are stirred, they may be stirred by hand or using a rotary stirrer. The rotary stirrer is a device for stirring the object article and the biofilm removing agent composition of the present invention or the treatment liquid of the present invention by rotating them about a rotation axis. They may be stirred only in a constant direction or may also be stirred in reverse directions in the rotary stirrer. Further, they can be stirred continuously or intermittently.

Examples of a rotary stirrer available to users include, for example, a pulsator washing machine, an agitator washing machine, or a front-loading washing machine.

The method for removing a biofilm of the present invention is preferably a method in which the textile product where the biofilm exists is immersed in the treatment liquid of the present invention and they are stirred using a rotary stirrer.

When the object article is a hard article in the method for removing a biofilm of the present invention, after being brought into contact with the hard article, the biofilm removing agent composition of the present invention or the treatment liquid of the present invention may be left to stand or may be made to flow, and is preferably made to flow from the viewpoint of more enhancing biofilm removal. Examples of preferable aspects of a method for making the biofilm removing agent composition of the present invention or the treatment liquid of the present invention flow with respect to the hard article include, for example, a method in which the biofilm removing agent composition or the treatment liquid of the present invention is continuously or intermittently sprayed on the surface of the static hard article, or a method in which the biofilm removing agent composition or the treatment liquid of the present invention where the hard article is immersed is made to flow. Examples of the aspect in which the biofilm removing agent composition or the treatment liquid of the present invention where the hard article is immersed is made to flow include, for example, a method in which the biofilm removing agent composition or the treatment liquid of the present invention where the hard article is immersed is subjected to an external force such as stirring or the like and thus made to flow, or a method in which the hard article immersed in the biofilm removing agent composition or the treatment liquid of the present invention is rotated or shaken.

When the treatment liquid of the present invention is prepared by diluting the biofilm removing agent composition of the present invention with water, a dilution ratio is, for example, 100000 times or less, further 50000 times or less, further 10000 times or less, and further 3000 times or less, and 10 times or more, further 50 times or more, and further 100 times or more from the viewpoint of biofilm removal.

A content of component (a) in the treatment liquid of the present invention is preferably 0.001 ppm or more, more preferably 0.01 ppm or more, further preferably 0.1 ppm or more, and further 1 ppm or more, and preferably 150000 ppm or less, more preferably 100000 ppm or less, further preferably 50000 ppm or less, further 10000 ppm or less, further 5000 ppm or less, further 1000 ppm or less, further 500 ppm or less, further 100 ppm or less, and further 50 ppm or less from the viewpoint of biofilm removal.

A content of component (b) in the treatment liquid of the present invention is preferably 0.001 ppm or more, more preferably 0.01 ppm or more, further preferably 0.1 ppm or more, and further 1 ppm or more, and preferably 5000000 ppm or less, more preferably 1000000 ppm or less, further preferably 500000 ppm or less, further 100000 ppm or less, further 50000 ppm or less, further 10000 ppm or less, further 5000 ppm or less, further 1000 ppm or less, further 500 ppm or less, further 100 ppm or less, and further 50 ppm or less from the viewpoint of biofilm removal.

In the treatment liquid of the present invention, the range of the mass ratio of each component described in the biofilm removing agent composition of the present invention can be applied as-is as the range of the mass ratio of each component in the treatment liquid of the present invention.

The treatment liquid of the present invention has a pH of preferably 1 or more, more preferably 3 or more, further preferably 5 or more, and furthermore preferably 6 or more, and preferably 14 or less, more preferably 12 or less, and further preferably 10 or less from the viewpoint of biofilm removal. The pH is a value measured at 25°C using a glass electrode. The pH is measured by the same method as the aforementioned method.

A hardness of water used for the preparation of the treatment liquid of the present invention is preferably 0°dH or more, more preferably 1°dH or more, and further preferably 3°dH or more, and preferably 30°dH or less, more preferably

25°dH or less, further preferably 20°dH or less, furthermore preferably 10°dH or less, and further 5°dH or less by German hardness from the viewpoint of biofilm removal.

Further, a hardness of the treatment liquid of the present invention may fall within the above range.

Here, German hardness (°dH) as used herein refers to the concentration of calcium and magnesium in water expressed in terms of a $CaCO_3$ equivalent concentration, and 1 mg/L (ppm) = approximately 0.056°dH (1°dH = 17.8 ppm).

This concentration of calcium and magnesium for German hardness is determined by a chelate titration method using an ethylenediaminetetraacetic acid disodium salt.

A specific method for measuring the German hardness of water as used herein is described below.

<Method for measuring German hardness of water>

[Reagent]

- 0.01 mol/l EDTA·2Na solution: a 0.01 mol/l aqueous solution of disodium ethylenediaminetetraacetate (a solution for titration, 0.01 M EDTA-2Na, manufactured by Sigma-Aldrich)
- Universal BT as an indicator (product name: Universal BT, manufactured by DOJINDO LABORATORIES)
- Ammonia buffer solution for hardness measurement (a solution obtained by dissolving 67.5 g of ammonium chloride in 570 ml of a 28 w/v% ammonia solution and making the total amount 1000 ml with ion-exchanged water)

[Measurement of hardness]

(1) 20 ml of water as a sample is collected into a conical beaker with a volumetric pipette.
(2) 2 ml of the ammonia buffer solution for hardness measurement is added.
(3) 0.5 ml of Universal BT as an indicator is added. It is confirmed that the solution after the addition is reddish purple.
(4) While the conical beaker is shaken well, the 0.01 mol/l EDTA·2Na solution is added dropwise from a burette, and the point of time when the water as a sample turns blue is taken as the end point of titration. (5) The total hardness is determined by the following calculation formula:

$$\text{hardness } (°\text{dH}) = T \times 0.01 \times F \times 56.0774 \times 100 / A$$

T: titration amount of 0.01 mol/l EDTA·2Na solution (mL)
A: sample volume (20 mL, volume of water as a sample)
F: factor for 0.01 mol/l EDTA·2Na solution

When the textile product where the biofilm exists is immersed in the treatment liquid of the present invention, a period of time during which the textile product is immersed therein (brought into contact therewith) is preferably 10 seconds or more, more preferably 1 minute or more, and further preferably 5 minutes or more, and preferably 1 day or less, more preferably 15 hours or less, and further preferably 5 hours or less from the viewpoint of biofilm removal.

After immersion, the textile product is rinsed with water and dried. Rinsing may be carried out using water in conformance with a publicly-known method such as washing the textile product or the like. Examples of water used for rinsing in the present invention include, but are not particularly limited to, tap water, well water, ion-exchanged water, sterile water, distilled water, and others.

When the biofilm removing agent composition of the present invention or the treatment liquid of the present invention is sprayed on or applied to the object article, a use amount of the biofilm removing agent composition of the present invention or the treatment liquid of the present invention is not particularly limited, but can be, for example, preferably 0.0001 g or more and more preferably 0.001 g or more, and preferably 100 g or less and more preferably 10 g or less as the amount of component (a) per square centimeter of a unit area of the object article from the viewpoint of biofilm removal.

When the biofilm removing agent composition of the present invention or the treatment liquid of the present invention is sprayed on or applied to the object article, a period of time during which the biofilm removing agent composition of the present invention or the treatment liquid of the present invention is brought into contact with the object article where the biofilm exists (a period of time during which they are left) is preferably 10 seconds or more, more preferably 1 minute or more, and further preferably 5 minutes or more, and preferably 1 day or less, more preferably 15 hours or less, and further

preferably 5 hours or less from the viewpoint of biofilm removal.

After contact, the object article may be dried as-is, wiped with clean fabric or the like, or rinsed with water. When the object article is rinsed, the object article may be subjected to an external force (physical force) from a sponge or the like or may be simply rinsed with a stream of water, and is preferably rinsed with water from the viewpoint of biofilm removal.

When the biofilm removing agent composition of the present invention or the treatment liquid of the present invention is brought into contact with the object article via a nonwoven fabric impregnated therewith, a nonwoven fabric processed into the form of a sheet can be used, and the fibers of which the nonwoven fabric is made are preferably made of one or more types of fibers selected from the above hydrophilic fibers and hydrophobic fibers.

A method for bringing the composition or the treatment liquid into contact with the object article may be pressing the nonwoven fabric impregnated with the biofilm removing agent composition of the present invention or the treatment liquid of the present invention against the object article and applying an external force in the range that it does not damage the object to allow the biofilm removing agent composition of the present invention or the treatment liquid which is an aqueous dilute solution of the composition to be transferred to and brought into contact with the object article via the nonwoven fabric impregnated therewith, and may be any of scrubbing, rubbing, and tapping.

The biofilm removing agent composition of the present invention is suitably used for removing a biofilm from an object article to which the biofilm adheres.

In other words, the present invention provides use of a composition containing the above components (a) and (b) for removing a biofilm from an object article to which the biofilm adheres.

The composition containing the above components (a) and (b) is the same as the biofilm removing agent composition of the present invention, and the specific aspects of components (a) and (b) are also the same. The aspects described in the biofilm removing agent composition of the present invention can be appropriately applied to the specific aspects of the above composition. Further, the aspects described in the method for removing a biofilm of the present invention can be appropriately applied to the use aspects of the above composition.

In addition to the aforementioned embodiments, the present invention discloses the aspects below.

<1> A biofilm removing agent composition containing the following components (a) and (b),

component (a): one or more compounds selected from (a1) a compound represented by the following general formula (a1) (hereinafter referred to as component (a1)) and (a2) a bispyridinium compound (hereinafter referred to as component (a2)),

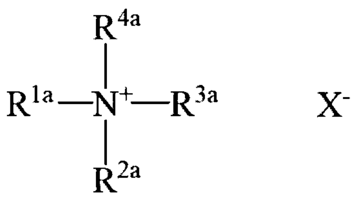

(a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and

component (b): an anionic surfactant.

<2> The biofilm removing agent composition according to <1>, wherein component (b) is an anionic surfactant including one or more compounds selected from (b1) a compound represented by the following general formula (b1) (hereinafter referred to as component (b1)), (b2) a compound represented by the following general formula (b2) (hereinafter referred to as component (b2)), and (b3) an internal olefin sulfonate with 14 or more and 20 or less carbons (hereinafter referred to as component (b3)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion, and

$R^{2b}$-B-$SO_3$M (b2)

wherein in the general formula (b2), $R^{2b}$ represents an alkyl group with 3 or more and 21 or less carbons, B represents a benzene ring, M is a hydrogen ion, an alkali metal ion, an alkaline earth metal ion (1/2 atom), an ammonium ion, or an organic ammonium ion, and the sulfonic acid group is bonded at the ortho position, meta position, or para position relative to $R^{2b}$ bonded to B.

<3> The biofilm removing agent composition according to <2>, wherein in the general formula (b1) of component (b1), $R^{1b}$ is a hydrocarbon group, preferably a linear or branched alkyl group or a linear or branched alkenyl group, more preferably a linear or branched alkyl group, and further preferably a linear alkyl group with 8 or more, preferably 10 or more, and more preferably 12 or more, and 22 or less, preferably 20 or less, more preferably 18 or less, and further preferably 16 or less carbons,

p is a number of 0 or more, preferably 0.1 or more, more preferably 0.2 or more, further preferably 0.3 or more, furthermore preferably 0.5 or more, furthermore preferably 1 or more, and furthermore preferably 2 or more, and 10 or less, preferably 8 or less, more preferably 5 or less, further preferably 3 or less, and furthermore preferably 2.5 or less,
q is a number of 0 or more, preferably 0.5 or more, more preferably 1 or more, and further preferably 2 or more, and 25 or less, preferably 8 or less, more preferably 5 or less, and further preferably 3 or less, and
M is a hydrogen ion, an alkali metal ion, an alkaline earth metal ion (1/2 atom), an ammonium ion, or an organic ammonium ion, and preferably a hydrogen ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<4> The biofilm removing agent composition according to <2> or <3>, wherein in the general formula (b1) of component (b1), $R^{1b}$ is a linear or branched alkyl group or a linear or branched alkenyl group, more preferably a linear or branched alkyl group, and further preferably a linear alkyl group with 12 or more and 16 or less carbons,

p is a number of 0.3 or more, furthermore preferably 0.5 or more, furthermore preferably 1 or more, and furthermore preferably 2 or more, and 8 or less, more preferably 5 or less, further preferably 3 or less, and furthermore preferably 2.5 or less,
q is a number of 0 or more, preferably 0.5 or more, more preferably 1 or more, and further preferably 2 or more, and 25 or less, preferably 8 or less, more preferably 5 or less, and further preferably 3 or less, and
M is a hydrogen ion, an alkali metal ion, an alkaline earth metal ion (1/2 atom), an ammonium ion, or an organic ammonium ion, and preferably a hydrogen ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<5> The biofilm removing agent composition according to any of <2> to <4>, wherein in the general formula (b1) of component (b1), $R^{1b}$ is a linear or branched alkyl group and further preferably a linear alkyl group with 12 or more and 16 or less carbons,

p is a number of 0.3 or more and 8 or less, preferably 0.3 or more and 5 or less, more preferably 0.5 or more and 3 or less, and furthermore preferably 0.5 or more and 2.5 or less,
q is a number of 0 or more and 8 or less, preferably 0 or more and 5 or less, more preferably 0 or more and 3 or less, and furthermore preferably 0 or more and 2.5 or less, and
M is a hydrogen ion, an ammonium ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<6> The biofilm removing agent composition according to any of <2> to <5>, wherein component (b3) is an internal olefin sulfonate with 16 or more and 18 or less carbons.
<7> The biofilm removing agent composition according to any of <2> to <6>, wherein component (b) is an anionic surfactant including one or more compounds selected from component (b1) of the general formula (b1), in which p is 0.1 or more and 10 or less and q is 0 or more and 25 or less, component (b2) of the general formula (b2), in which $R^{2b}$ has 8 or more and 18 or less carbons, and the alkyl group with 8 or more and 18 or less carbons internal olefin sulfonate of component (b3), which has 16 or more and 18 or less carbons.
<8> The biofilm removing agent composition according to any of <2> to <7>, wherein a content of components (b1),

(b2), and (b3) in component (b) is 70 mass% or more, more preferably 80 mass% or more, and further preferably 90 mass% or more, and 100 mass% or less.

<9> The biofilm removing agent composition according to any of <2> to <8>, wherein component (a2) is octenidine dihydrochloride.

<10> The biofilm removing agent composition according to any of <1> to <9>, wherein a mass ratio of a content of component (a) to a content of component (b) in the biofilm removing agent composition, (a)/(b), is 0.001 or more, more preferably 0.005 or more, further preferably 0.01 or more, furthermore preferably 0.02 or more, furthermore preferably 0.05 or more, furthermore preferably 0.1 or more, furthermore preferably 0.12 or more, and furthermore preferably 0.15 or more, and 7 or less, more preferably 5 or less, furthermore preferably 4 or less, furthermore preferably 3 or less, furthermore preferably 2 or less, furthermore preferably 1.5 or less, furthermore preferably less than 1, furthermore preferably 0.95 or less, furthermore preferably 0.5 or less, furthermore preferably 0.95 or less, furthermore preferably 0.5 or less, and furthermore preferably 0.3 or less.

<11> The biofilm removing agent composition according to any of <1> to <10>, wherein the biofilm removing agent composition further contains water, and in the biofilm removing agent composition, a content of component (a) is 0.001 mass% or more, more preferably 0.01 mass% or more, further preferably 0.1 mass% or more, and furthermore preferably 1 mass% or more, and 80 mass% or less, more preferably 70 mass% or less, further preferably 50 mass% or less, furthermore preferably 10 mass% or less, and furthermore preferably 5 mass% or less, and a content of component (b) is 0.001 mass% or more, more preferably 0.01 mass% or more, further preferably 0.1 mass% or more, furthermore preferably 1 mass% or more, furthermore preferably 5 mass% or more, furthermore preferably 10 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 18 mass% or less.

<12> The biofilm removing agent composition according to any of <1> to <11>, wherein the composition is used for textile products.

<13> A method for removing a biofilm including bringing the biofilm removing agent composition according to any of <1> to <12> or a treatment liquid which is an aqueous dilute solution of the composition into contact with an object article where the biofilm exists.

<14> The method for removing a biofilm according to <13>, wherein after bringing the biofilm removing agent composition or the treatment liquid into contact with the object article where the biofilm exists, the object article to which the biofilm removing agent composition or the treatment liquid adheres is wiped or rinsed with water to remove the biofilm removing agent composition or the treatment liquid from the object article.

<15> The method for removing a biofilm according to <13> or <14>, wherein the object article is a textile product.

<16> A method for removing a biofilm including bringing a treatment liquid into contact with an object article where the biofilm exists, the treatment liquid containing the following components (a) and (b) and water,

component (a): one or more compounds selected from (a1) a compound represented by the following general formula (a1) (hereinafter referred to as component (a1)) and (a2) a bispyridinium compound (hereinafter referred to as component (a2)),

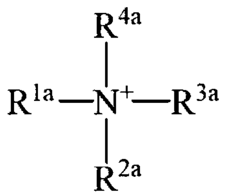 $X^-$ (a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and

component (b): an anionic surfactant.

<17> The method for removing a biofilm according to <16>, wherein a mass ratio of a content of component (a) to a content of component (b) in the treatment liquid, (a)/(b), is 0.001 or more, more preferably 0.005 or more, further preferably 0.01 or more, furthermore preferably 0.02 or more, furthermore preferably 0.05 or more, furthermore preferably 0.1 or more, furthermore preferably 0.12 or more, and furthermore preferably 0.15 or more, and 7 or less, more preferably 5 or less, furthermore preferably 4 or less, furthermore preferably 3 or less, furthermore preferably 2 or less, furthermore preferably 1.5 or less, furthermore preferably less than 1, furthermore preferably 0.95 or less, furthermore preferably 0.5 or less, furthermore preferably 0.95 or less, furthermore preferably 0.5 or less, and

furthermore preferably 0.3 or less.

<18> The method for removing a biofilm according to <16> or <17>, wherein after bringing the treatment liquid into contact with the object article where the biofilm exists, the object article to which the treatment liquid adheres is wiped or rinsed with water to remove the treatment liquid from the object article.

<19> Use of a composition containing the following components (a) and (b) for removing a biofilm from an object article to which the biofilm adheres,

component (a): one or more compounds selected from (a1) a compound represented by the following general formula (a1) (hereinafter referred to as component (a1)) and (a2) a bispyridinium compound (hereinafter referred to as component (a2)),

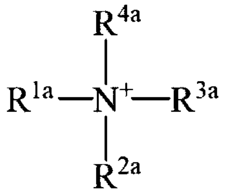 $X^-$ (a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and
component (b): an anionic surfactant.

<20> Use of the composition according to <19> for removing a biofilm from an object article to which the biofilm adheres, wherein component (b) is an anionic surfactant including one or more compounds selected from (b1) a compound represented by the following general formula (b1) (hereinafter referred to as component (b1)), (b2) a compound represented by the following general formula (b2) (hereinafter referred to as component (b2)), and (b3) an internal olefin sulfonate with 14 or more and 20 or less carbons (hereinafter referred to as component (b3)),

$R^{16}\text{-O-}[(PO)_p/(EO)_q]\text{-}SO_3M$ (b1)

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion, and

$R^{26}\text{-B-}SO_3M$ (b2)

wherein in the general formula (b2), $R^{2b}$ represents an alkyl group with 3 or more and 21 or less carbons, B represents a benzene ring, M is a hydrogen ion, an alkali metal ion, an alkaline earth metal ion (1/2 atom), an ammonium ion, or an organic ammonium ion, and the sulfonic acid group is bonded at the ortho position, meta position, or para position relative to $R^{2b}$ bonded to B.

<21> Use of the composition according to <19> or <20> for removing a biofilm from an object article to which the biofilm adheres, wherein in the general formula (b1) of component (b1), $R^{1b}$ is a linear or branched alkyl group and further preferably a linear alkyl group with 12 or more and 16 or less carbons,

p is a number of 0.3 or more and 8 or less, preferably 0.3 or more and 5 or less, more preferably 0.5 or more and 3 or less, and furthermore preferably 0.5 or more and 2.5 or less,
q is a number of 0 or more and 8 or less, preferably 0 or more and 5 or less, more preferably 0 or more and 3 or less, and furthermore preferably 0 or more and 2.5 or less, and
M is a hydrogen ion, an ammonium ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<22> Use of the composition according to any of <19> to <21> for removing a biofilm from an object article to which the biofilm adheres, wherein component (b3) is an internal olefin sulfonate with 16 or more and 18 or less carbons.

<23> Use of the composition according to any of <19> to <22> for removing a biofilm from an object article to which the biofilm adheres, wherein component (b) is an anionic surfactant including one or more compounds selected from component (b1) of the general formula (b1), in which p is 0.1 or more and 10 or less and q is 0 or more and 25 or less, component (b2) of the general formula (b2), in which $R^{2b}$ has 8 or more and 18 or less carbons, and the alkyl group with 8 or more and 18 or less carbons internal olefin sulfonate of component (b3), which has 16 or more and 18 or less carbons.

<24> Use of the composition according to any of <19> to <23> for removing a biofilm from an object article to which the biofilm adheres, wherein a content of components (b1), (b2), and (b3) in component (b) is 70 mass% or more, more preferably 80 mass% or more, and further preferably 90 mass% or more, and 100 mass% or less.

<25> Use of the composition according to any of <19> to <23> for removing a biofilm from an object article to which the biofilm adheres, wherein component (a2) is octenidine dihydrochloride.

<26> Use of the composition according to any of <19> to <25> for removing a biofilm from an object article to which the biofilm adheres, wherein a mass ratio of a content of component (a) to a content of component (b) in the composition, (a)/(b), is 0.001 or more, more preferably 0.005 or more, further preferably 0.01 or more, furthermore preferably 0.02 or more, furthermore preferably 0.05 or more, furthermore preferably 0.1 or more, furthermore preferably 0.12 or more, and furthermore preferably 0.15 or more, and 7 or less, more preferably 5 or less, furthermore preferably 4 or less, furthermore preferably 3 or less, furthermore preferably 2 or less, furthermore preferably 1.5 or less, furthermore preferably less than 1, furthermore preferably 0.95 or less, furthermore preferably 0.5 or less, furthermore preferably 0.95 or less, furthermore preferably 0.5 or less, and furthermore preferably 0.3 or less.

## Examples

[Formulation component]

In examples and comparative examples, the components below were used.

<Component (a)>

· Q-D08: dioctyldimethylammonium chloride, a compound of the general formula (a1) in which $R^{1a}$ and $R^{2a}$ are alkyl groups with 8 carbons, $R^{3a}$ and $R^{4a}$ are methyl groups, and $X^-$ is a chloride ion, component (a1)

· C10DMAB: didecyldimethylammonium bromide, a compound of the general formula (a1) in which $R^{1a}$ and $R^{2a}$ are alkyl groups with 10 carbons, $R^{3a}$ and $R^{4a}$ are methyl groups, and $X^-$ is a bromide ion, component (a1), the trade name "Didecyldimethylammonium Bromide," manufactured by Tokyo Chemical Industry Co., Ltd.

· Q-D10: didecyldimethylammonium chloride, a compound of the general formula (a1) in which $R^{1a}$ and $R^{2a}$ are alkyl groups with 10 carbons, $R^{3a}$ and $R^{4a}$ are methyl groups, and $X^-$ is a chloride ion, component (a1)

· Octenidine: octenidine dihydrochloride, a compound of the general formula (a22) in which each $R^{5a}$ is an n-octyl group, Y is an n-decenyl group, A is Cl, q is 1, and r is 2, component (a2), the trade name "Octenidine Dihydrochloride," manufactured by Tokyo Chemical Industry Co., Ltd.

<Component (b)>

· C16IOS: an internal olefin sulfonic acid potassium salt with 16 carbons, component (b3)

· ApS: a partially PO-added alkyl ether sulfate, a compound of the general formula (b1) in which $R^{1b}$ is an alkyl group with 8 to 12 carbons, p is 0.6, q is 0, and M is a sodium ion, component (b1)

· AS: an alkyl sulfate, a compound of the general formula (b1) in which $R^{1b}$ is an alkyl group with 12 carbons, p is 0, q is 0, and M is a sodium ion, component (b1), the trade name "Sodium Dodecyl Sulfate," manufactured by Tokyo Chemical Industry Co., Ltd.

· ES: a polyoxyethylene alkyl ether sulfate, a compound of the general formula (b1) in which $R^{1b}$ is an alkyl group with 10 to 16 carbons, p is 0, q is 2, and M is a sodium ion, component (b1)

· C12APES: a polyoxypropylene polyoxyethylene alkyl ether sulfate having an alkyl group with 12 carbons, a compound of the general formula (b1) in which $R^{1b}$ is an alkyl group with 12 carbons, p is 2, q is 2, and M is monoethanolammonium, component (b1)

· LAS (linear alkylbenzene sulfonate), component (b2), the trade name "NEOPELEX G-25," manufactured by Kao Corporation

[Preparation of biofilm removing agent composition]

A method for preparing the biofilm removing agent compositions shown in Tables 1 to 6 is as described below. A Teflon stirrer bar with a length of 3 cm was put in a glass beaker with a capacity of 200 mL. Next, 10 g of ion-exchanged water and components (a) and (b) in a formulation shown in Tables 1 to 6 were put therein and stirred at 100 r/min for 10 minutes, and ion-exchanged water was added in the equivalent of 95 mass% of the additionally put-in amount necessary to make the total amount 100 g and stirring was carried out at 100 r/min for 5 minutes. After that, the pH (25°C) was adjusted to 8 with monoethanolamine or hydrochloric acid (in Examples 38 and 39 in Table 6, the pH was adjusted to those shown in the table). Ion-exchanged water was added to make the total amount 100 g and stirring was carried out at 100 r/min for 15 minutes, and each biofilm removing agent composition in the formulation shown in Tables 1 to 6 was obtained then. After preparation, the pH of each biofilm removing agent composition in Tables 1 to 6 was checked again, and the pH remained unchanged from the pH when it was adjusted. Note that the formulation amounts of the components in the biofilm removing agent compositions in Tables 1 to 6 are all on an active component basis. Further, the formulation amounts of the components shown for Example 33 in Table 4 are those in a test treatment liquid after dilution, as described later.

[Biofilm removability evaluation]

(1-1) Preparation of biofilm-formed fabric

Glycerol stock solutions of *Rhodotorula mucilaginosa* (a strain isolated from clothing) and *Methylobacterium variabile* (a strain isolated from clothing) were spread onto potato dextrose agar (manufactured by Difco Laboratories Inc), and incubation was carried out statically at 30°C for 2 days. A glycerol stock solution of *Moraxella osloensis* (a strain isolated from clothing) was spread onto SCD agar (manufactured by SHIOTANI M.S. CO., LTD, the SCD agar "DAIGO," for general bacterial testing), and incubation was carried out statically at 37°C for one day. The bacteria after incubation were each scraped off with a disposable loop (manufactured by AS ONE Corporation, Disposable Loop Type 10), and suspended in an R2A medium (manufactured by SHIOTANI M.S. CO., LTD, the R2A medium "DAIGO"). The turbidity (OD600) of each bacterial suspension was measured using a spectrophotometer (manufactured by APEL Co., Ltd., model number: PD-303S), and the bacterial solutions were diluted such that OD600 = 0.2 for *R. mucilaginosa,* and OD600 = 0.01 for *M. variabile* and M. *osloensis.*

Plain-woven cotton fabric (manufactured by Tanigashira Shoten, Cotton 2003) cut to 3 × 3 cm (in Example 4, PE faille (manufactured by Tanigashira Shoten, Polyester Faille) was used) was sterilized under pressure in an autoclave (manufactured by PHC Corporation, the high-pressure steam sterilizer Laboratory Autoclave, model number: MLS-3781). The plain-woven cotton fabric or PE faille after sterilization was placed in a No. 6 screw bottle (manufactured by Maruemu Corporation, Screw Bottle No. 6), and 1 mL of each of the bacterial solutions of the above three types of bacteria and 7 mL of an R2A medium were added. The bottle was capped and sealed tightly, and shaking incubation was carried out for 2 days under the conditions of 30°C and 200 rpm in the small-sized constant-temperature shaking incubator Bioshaker (manufactured by TAITEC CORPORATION, model number: BR-23FP). The plain-woven cotton fabric or PE faille after incubation was transferred to a new No. 6 screw bottle, and 10 mL of autoclave-sterilized ion-exchanged water was added. Shaking washing was carried out for 3 minutes at 25°C and 150 rpm in the small-sized constant-temperature shaking incubator Bioshaker. The plain-woven cotton fabric or PE faille after washing was air-dried for one hour in a safety cabinet to obtain biofilm-formed fabric.

Biofilm formation on the fabric was checked by loosening the fabric into threads with tweezers, staining the threads, and observing them with a confocal laser scanning microscope (manufactured by Carl Zeiss Co., Ltd, LSM 880 ZEN). The threads to be observed were stained for 30 minutes with a live cell staining dye (manufactured by DOJINDO LABORATORIES, C375-Cellstain™-CFSE), a dead cell staining dye (manufactured by DOJINDO LABORATORIES, P378-Cellstain™-PI solution), a cellulose staining dye (manufactured by Sigma-Aldrich, Calcofluor White Stain), a sugar staining dye (manufactured by Thermo Fisher Scientific, Lectin PNA From *Arachis hypogaea* (peanut), Alexa Fluor™ 647 Conjugate), and a sugar staining dye (manufactured by Thermo Fisher Scientific, Concanavalin Alexa Fluor™ 647 Conjugate).

(1-2) Preparation of biofilm-formed hard surface

In Example 37 in Table 5, after 0.3 mL of each of the bacterial solutions of the above three types of bacteria and 2.1 mL of an R2A medium were added to each well of a polystyrene 6-well plate (manufactured by Corning Incorporated, Falcon Cell Culture 6-well Multiwell Plate, Flat Bottom, with lid) and the plate was covered with a lid and sealed tightly, incubation was carried out statically at 30°C for 2 days. The upper-layer liquid in the 6-well plate after incubation was sucked up, and the plate was air-dried for one hour in a safety cabinet to obtain a biofilm-formed hard surface.

Biofilm formation on the hard surface was checked by observation using a digital microscope (manufactured by

KEYENCE CORPORATION, VHX-7000).

(2) Biofilm removal test

(Biofilm removal evaluation)

The prepared biofilm-formed fabric was cut to 1.5 × 1.5 cm, and sterilized plain-woven cotton fabric was cut to 1.5 × 3 cm. One piece of the cut biofilm-formed fabric plus two pieces of the cut sterilized plain-woven fabric, i.e., three pieces in total, were stacked together and placed in a 5-mL tube (manufactured by Eppendorf SE, Eppendorf Tubes 5.0 mL, model number: 0030 119.401). 3 mL of a test treatment liquid obtained by diluting each biofilm removing agent composition in Tables 1 to 6 3000 times with model tap water (4°dH) was added thereto (in Examples 5 to 7 in Table 1, test treatment liquids were prepared by changing the hardness of the model tap water for diluting the compositions 3000 times to those shown in the table; and further, as shown in Table 4, the test treatment liquid after dilution used in Example 33 had the concentrations shown in the table, and compositions with the concentrations shown in the table were used as they were without dilution in Examples 34 and 35) and shaking washing was carried out for 10 minutes at 25°C and 150 rpm in the small-sized constant-temperature shaking incubator Bioshaker, and this was a washing step. The fabric after washing was transferred to a 5-mL tube containing 3 mL of the model tap water and shaking washing was carried out for 3 minutes under the same conditions, and this was a rinsing step. After rinsing, only the biofilm-formed fabric was removed and air-dried for 30 minutes in a safety cabinet. Further, the same processes were also performed using the model tap water (4°dH) as a test treatment liquid in place of each biofilm removing agent composition to obtain biofilm-formed fabric after treatment with the model tap water.

For the biofilm-formed hard surface, 3 mL of a test treatment liquid obtained by diluting the biofilm removing agent composition of Example 37 in Table 5 30000 times with the model tap water (4°dH) was added to each well and shaking washing was carried out for 10 minutes at 25°C and 150 rpm in the small-sized constant-temperature shaking incubator Bioshaker, and this was a washing step. The test treatment liquid in Bioshaker after washing was sucked up with a micropipette (manufactured by Eppendorf SE, Eppendorf Research® plus), 3 mL of the model tap water was added, and shaking washing was carried out for 3 minutes under the same conditions, and this was a rinsing step. The model tap water in Bioshaker after rinsing was sucked up with a micropipette, and the biofilm-formed hard surface after rinsing was air-dried for 30 minutes in a safety cabinet. Further, the same processes were also performed using the model tap water (4°dH) as a test treatment liquid in place of the biofilm removing agent composition of Example 37 to obtain a biofilm-formed hard surface after treatment with the model tap water.

(Extraction of EPS (extracellular polysaccharide))

The biofilm-formed fabric after air-drying was placed in a 1.5-mL tube (manufactured by Eppendorf SE, Eppendorf Tubes 1.5 mL, model number: 0030 125.150) containing 600 μL of a 1.5 M aqueous solution of sodium chloride (manufactured by FUJIFILM Wako Pure Chemical Corporation, Sodium Chloride). The tube was capped and placed in an ultrasonic cleaner (manufactured by Emerson Japan, Ltd., desktop ultrasonic cleaner, model number: 2510JDTH) for 2 hours in cooling ice to extract EPS remaining on the fabric. EPS (extracellular polysaccharide) is the main component of biofilms. After the solution was stirred for 5 minutes with Cute Mixer (manufactured by TOKYO RIKAKIKAI CO., LTD., model number: CUTE MIXER CM-1000), this solution and the biofilm-formed fabric were filtered using a filter (manufactured by ADVANTEC TOYO KAISHA, LTD., Model: DISMIC-25CS) and a syringe (manufactured by Terumo Corporation, model number: SS-02SZ2.5ML). The filtrate was collected into a 2.0-mL tube (manufactured by Eppendorf SE, Eppendorf Tubes 2.0 mL, model number: 0030 121.597), and 1.2 mL of ethanol (manufactured by FUJIFILM Wako Pure Chemical Corporation, Ethanol (99.5)) cooled in advance to -30°C was added. The tube was capped and inverted for mixing, and left to stand at -30°C to precipitate EPS. After cooling, centrifugation was carried out under the conditions of 4°C and 13000 rpm for 15 minutes in a centrifuge (manufactured by Eppendorf SE, High-Speed Centrifuge, model number: Centrifuge 5430), the supernatant was removed, and air-drying was carried out for one hour. 200 μL of ion-exchanged water was added to the tube after air-drying and stirring was carried out for 5 minutes with Cute Mixer to dissolve the precipitated EPS in the ion-exchanged water.

Further, for the biofilm-formed hard surface after air-drying, 2 mL of a 1.5 M sodium chloride aqueous solution was placed in each well and pipetting was carried out 20 times with a micropipette to disperse the biofilm in the sodium chloride aqueous solution. The biofilm dispersion was placed in a 5-mL tube, and the tube was capped and placed in an ultrasonic cleaner for 2 hours in cooling ice to extract EPS remaining on the hard surface. The filtrate was collected into a 0.6-mL tube, and EPS was precipitated and dissolved in ion-exchanged water in the same manner as described above.

(Quantification of EPS)

100 μL of the EPS aqueous solution obtained in the previous step was placed in a glass test tube (manufactured

by Corning Incorporated, Disposable Glass Test Tube, model number: 99445-16), and 100 μL of a 5% aqueous solution of phenol (manufactured by FUJIFILM Wako Pure Chemical Corporation, Phenol) was added thereto. After stirring was carried out with a vortex mixer for 3 seconds, 500 μL of concentrated sulfuric acid (manufactured by FUJIFILM Wako Pure Chemical Corporation, Sulfuric Acid) was added, and stirring was further carried out with a vortex mixer (manufactured by AS ONE Corporation, vortex mixer, model number: VTX-3000L) for 3 seconds. After the reaction solution was left to stand for 30 minutes, 200 μL was dispensed into a 96-well plate (manufactured by AGC TECHNO GLASS Co., Ltd., model number: 3815-012-MYP Microplate) and the absorbance (492 nm) of the reaction solution was measured with a microplate reader (manufactured by Tecan Group Ltd., fluorescence/absorbance/luminescence plate reader, model number: Infinite M200 PRO). The EPS removal rate was calculated using the equation (1) on the basis of the EPS remaining amount quantified as a glucose equivalent. A higher EPS removal rate value indicates superior biofilm removability. The results are shown in Tables 1 to 6.

$$\text{EPS removal rate (\%)} = [(W1 - W2) / W1] \times 100 \ldots (1)$$

W1: EPS remaining amount on biofilm-formed fabric or biofilm-formed hard surface after treatment with model tap water

W2: EPS remaining amount on biofilm-formed fabric or biofilm-formed hard surface after treatment with each test treatment liquid

[Table 1]

| | | | | Example 1 | Example 2 | Example 3 | Example 4 | Example 5 | Example 6 | Example 7 |
|---|---|---|---|---|---|---|---|---|---|---|
| Biofilm removing agent composition | Formulation component (mass%) | (a) | Q-D08 | 1 | 6 | 3 | 3 | 3 | 3 | 3 |
| | | (b) | C16IOS | 15 | 15 | 15 | 15 | 15 | 15 | 15 |
| | | Ion-exchanged water | | Balance | Balance | Balance | Balance | Balance | Balance | Balance |
| | | Total | | 100 | 100 | 100 | 100 | 100 | 100 | 100 |
| | (a)/(b) (mass ratio) | | | 0.07 | 0.40 | 0.20 | 0.20 | 0.20 | 0.20 | 0.20 |
| Fabric type | | | | Plain-woven | Plain-woven | Plain-woven | PE faille | Plain-woven | Plain-woven | Plain-woven |
| Hardness of water for dilution (°dH) | | | | 4 | 4 | 4 | 4 | 0 | 2 | 20 |
| Evaluation | EPS removal rate (%) | | | 30.2 | 46.4 | 73.1 | 83.2 | 31.2 | 58.3 | 45.2 |

[Table 2]

| Biofilm removing agent composition | | | Example 8 | Example 9 | Example 10 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|---|
| Formulation component (mass%) | (a) | Q-D08 | 3 | 3 | 3 | 3 | 3 | 3 | | | | 3 | 3 | 3 | 3 |
| | | C10DMAB | | | | | | | 3 | | | | | | |
| | | Q-D10 | | | | | | | | 3 | | | | | |
| | | Octenidine | | | | | | | | | 15 | | | | |
| | (b) | C16IOS | 15 | | | | | | 15 | 15 | 30 | 30 | 15 | 15 | 30 |
| | | ApS | | 15 | | | | | | | | | 15 | | |
| | | AS | | | 15 | | | | | | | | | | |
| | | ES | | | | 15 | | | | | | | | | |
| | | C12APES | | | | | 15 | | | | | | | 15 | 15 |
| | | LAS | | | | | | 15 | | | | | | | |
| | Ion-exchanged water | | Balance | Balance | Balance | Balance | Balance | Balance | Balance | Balance | Balance | Balance | Balance | Balance | Balance |
| | Total | | 100 | 100 | 100 | 100 | 100 | 100 | 100 | 100 | 100 | 100 | 100 | 100 | 100 |
| (a)/(b) (mass ratio) | | | 0.20 | 0.20 | 0.20 | 0.20 | 0.20 | 0.20 | 0.20 | 0.20 | 0.50 | 0.10 | 0.10 | 0.10 | 0.07 |
| Evaluation | EPS removal rate (%) | | 73.1 | 68.4 | 33.2 | 33.0 | 55.8 | 33.2 | 61.5 | 60.5 | 32.0 | 39.8 | 62.4 | 67.3 | 64.1 |

[Table 3]

| | | | | Example | | | | | | | | | | | | Comparative example |
|---|---|---|---|---|---|---|---|---|---|---|---|---|---|---|---|---|
| | | | | 21 | 22 | 23 | 24 | 25 | 26 | 27 | 28 | 29 | 30 | 31 | 32 | 1 |
| Biofilm removing agent composition | Formulation component (mass%) | (a) | Q-D08 | 3 | 3 | 3 | 3 | 3 | 3 | 3 | 3 | 12 | 15 | 15 | 15 | 15 |
| | | (b) | C16IOS | 7.5 | 15 | 30 | 75 | | | | | 15 | 15 | 7.5 | 3 | 0 |
| | | | ApS | | | | | 7.5 | 15 | 30 | 75 | | | | | |
| | | Ion-exchanged water | | Balance | Balance | Balance | Balance | Balance | Balance | Balance | Balance | Balance | Balance | Balance | Balance | Balance |
| | | Total | | 100 | 100 | 100 | 100 | 100 | 100 | 100 | 100 | 100 | 100 | 100 | 100 | 100 |
| | (a)/(b) (mass ratio) | | | 0.40 | 0.20 | 0.10 | 0.04 | 0.40 | 0.20 | 0.10 | 0.04 | 0.80 | 1.00 | 2.00 | 5.00 | - |
| Evaluation | EPS removal rate (%) | | | 41.1 | 73.1 | 39.8 | 46.6 | 40.2 | 68.4 | 35.8 | 40.2 | 34.1 | 26.4 | 20.8 | 13.2 | 8.34 |

[Table 4]

| | | | | Example | | |
|---|---|---|---|---|---|---|
| | | | | 33 | 34 | 35 |
| Biofilm removing agent composition or treatment liquid which is aqueous dilute solution of composition | Formulation component(ppm) | (a) | Q-D08 | 3 | 30000 | 30000 |
| | | (b) | C16IOS | 15 | 150000 | 150000 |
| | | Ion-exchanged water | | Balance | Balance | Balance |
| | | Total | | 100 | 100 | 100 |
| | (a)/(b) (mass ratio) | | | 0.20 | 0.20 | 0.20 |
| Evaluation | EPS removal rate (%) | | | 73.1 | 78.2 | 78.2 |

[Table 5]

| | | | | Example | |
|---|---|---|---|---|---|
| | | | | 36 | 37 |
| Biofilm removing agent composition | Formulation component (mass%) | (a) | Q-D08 | 3 | 3 |
| | | (b) | C16IOS | 15 | 15 |
| | | Ion-exchanged water | | Balance | Balance |
| | | Total | | 100 | 100 |
| | | Object surface | | Plain-woven fabric | Polystyrene |
| | (a)/(b) (mass ratio) | | | 0.20 | 0.20 |
| Evaluation | EPS removal rate (%) | | | 73.1 | 42.8 |

[Table 6]

| | | | | Example | | |
|---|---|---|---|---|---|---|
| | | | | 38 | 3 | 39 |
| Biofilm removing agent composition | Formulation component (mass%) | (a) | Q-D08 | 3 | 3 | 3 |
| | | (b) | C16IOS | 15 | 15 | 15 |
| | | Ion-exchanged water | | Balance | Balance | Balance |
| | | Total | | 100 | 100 | 100 |
| | (a)/(b) (mass ratio) | | | 0.20 | 0.20 | 0.20 |
| | pH (25°C) | | | 2 | 8 | 12 |
| Evaluation | EPS removal rate (%) | | | 50.2 | 73.1 | 49.4 |

## Claims

1. A biofilm removing agent composition comprising the following components (a) and (b),

   component (a): one or more compounds selected from (a1) a compound represented by the following general formula (a1) (hereinafter referred to as component (a1)) and (a2) a bispyridinium compound (hereinafter referred to as component (a2)),

   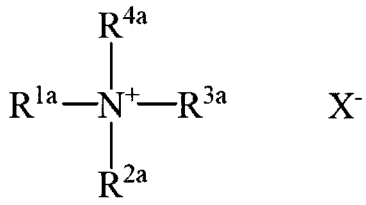

   (a1)

   wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and
   component (b): an anionic surfactant.

2. The biofilm removing agent composition according to claim 1, wherein the component (b) is an anionic surfactant including one or more compounds selected from (b1) a compound represented by the following general formula (b1) (hereinafter referred to as component (b1)), (b2) a compound represented by the following general formula (b2) (hereinafter referred to as component (b2)), and (b3) an internal olefin sulfonate with 14 or more and 20 or less carbons (hereinafter referred to as component (b3)),

   $$R^{16}\text{-O-}[(PO)_p/(EO)_q]\text{-}SO_3M \qquad (b1)$$

   wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion, and

   $$R^{2b}\text{-B-}SO_3M \qquad (b2)$$

   wherein in the general formula (b2), $R^{2b}$ represents an alkyl group with 3 or more and 21 or less carbons, B represents a benzene ring, M is a hydrogen ion, an alkali metal ion, an alkaline earth metal ion (1/2 atom), an ammonium ion, or an organic ammonium ion, and the sulfonic acid group is bonded at the ortho position, meta position, or para position relative to $R^{2b}$ bonded to B.

3. The biofilm removing agent composition according to claim 2, wherein the component (b) is an anionic surfactant including one or more compounds selected from the component (b1) of the general formula (b1), in which p is 0.1 or more and 10 or less and q is 0 or more and 25 or less, the component (b2) of the general formula (b2), in which $R^{2b}$ has 8 or more and 18 or less carbons, and the alkyl group with 8 or more and 18 or less carbons internal olefin sulfonate of the component (b3), which has 16 or more and 18 or less carbons.

4. The biofilm removing agent composition according to claim 2 or 3, wherein a content of the components (b1), (b2), and (b3) in the component (b) is 70 mass% or more and 100 mass% or less.

5. The biofilm removing agent composition according to any one of claims 1 to 4, wherein the component (a2) is octenidine dihydrochloride.

6. The biofilm removing agent composition according to any one of claims 1 to 5, wherein a mass ratio of a content of the component (a) to a content of the component (b), (a)/(b), is 0.001 or more and 7 or less.

**7.** The biofilm removing agent composition according to any one of claims 1 to 6, wherein the composition further comprises water, and a content of the component (a) is 0.001 mass% or more and 50 mass% or less and a content of the component (b) is 0.001 mass% or more and 80 mass% or less.

**8.** The biofilm removing agent composition according to any one of claims 1 to 7, wherein the composition is used for textile products.

**9.** A method for removing a biofilm comprising bringing the biofilm removing agent composition according to any one of claims 1 to 7 or a treatment liquid which is an aqueous dilute solution of the composition into contact with an object article where the biofilm exists.

**10.** The method for removing a biofilm according to claim 9, wherein after bringing the biofilm removing agent composition or the treatment liquid into contact with the object article where the biofilm exists, the object article to which the biofilm removing agent composition or the treatment liquid adheres is wiped or rinsed with water to remove the biofilm removing agent composition or the treatment liquid from the object article.

**11.** The method for removing a biofilm according to claim 9 or 10, wherein the object article is a textile product.

**12.** A method for removing a biofilm comprising bringing a treatment liquid into contact with an object article where the biofilm exists, the treatment liquid comprising the following components (a) and (b) and water,

component (a): one or more compounds selected from (a1) a compound represented by the following general formula (a1) (hereinafter referred to as component (a1)) and (a2) a bispyridinium compound (hereinafter referred to as component (a2)),

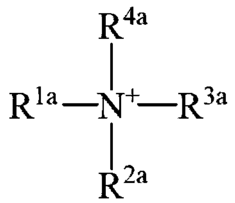 $X^-$ (a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and
component (b): an anionic surfactant.

**13.** The method for removing a biofilm according to claim 12, wherein a mass ratio of a content of the component (a) to a content of the component (b) in the treatment liquid, (a)/(b), is 0.001 or more and 7 or less.

**14.** The method for removing a biofilm according to claim 12 or 13, wherein after bringing the treatment liquid into contact with the object article where the biofilm exists, the object article to which the treatment liquid adheres is wiped or rinsed with water to remove the treatment liquid from the object article.

**15.** Use of a composition comprising the following components (a) and (b) for removing a biofilm from an object article to which the biofilm adheres,

component (a): one or more compounds selected from (a1) a compound represented by the following general formula (a1) (hereinafter referred to as component (a1)) and (a2) a bispyridinium compound (hereinafter referred to as component (a2)),

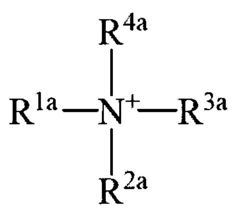 $X^-$ (a1)

wherein in the general formula (a1), $R^{1a}$ and $R^{2a}$ are each independently a linear or branched alkyl group with 6 or more and 12 or less carbons, $R^{3a}$ and $R^{4a}$ are each independently a linear or branched alkyl group with 1 or more and 3 or less carbons, and $X^-$ is an anion, and
component (b): an anionic surfactant.

**16.** Use of the composition according to claim 15 for removing a biofilm from an object article to which the biofilm adheres, wherein the component (b) is an anionic surfactant including one or more compounds selected from (b1) a compound represented by the following general formula (b1) (hereinafter referred to as component (b1)), (b2) a compound represented by the following general formula (b2) (hereinafter referred to as component (b2)), and (b3) an internal olefin sulfonate with 14 or more and 20 or less carbons (hereinafter referred to as component (b3)),

$$R^{16}\text{-O-}[(PO)_p/(EO)_q]\text{-}SO_3M \qquad \text{(b1)}$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion, and

$$R^{2b}\text{-B-}SO_3M \qquad \text{(b2)}$$

wherein in the general formula (b2), $R^{2b}$ represents an alkyl group with 3 or more and 21 or less carbons, B represents a benzene ring, M is a hydrogen ion, an alkali metal ion, an alkaline earth metal ion (1/2 atom), an ammonium ion, or an organic ammonium ion, and the sulfonic acid group is bonded at the ortho position, meta position, or para position relative to $R^{2b}$ bonded to B.

**INTERNATIONAL SEARCH REPORT**

International application No. **PCT/JP2024/011912**

**A. CLASSIFICATION OF SUBJECT MATTER**

***A01N 33/12***(2006.01)i; ***A01N 31/00***(2006.01)i; ***A01N 31/02***(2006.01)i; ***A01N 43/40***(2006.01)i; ***A01P 1/00***(2006.01)i; ***A01P 3/00***(2006.01)i; ***C11D 1/14***(2006.01)i; ***C11D 1/29***(2006.01)i; ***C11D 1/62***(2006.01)i; ***C11D 3/26***(2006.01)i; ***C11D 3/28***(2006.01)i; ***C11D 3/48***(2006.01)i

FI: A01N33/12 101; A01N31/00; A01N31/02; A01N43/40 101P; A01P1/00; A01P3/00; C11D1/14; C11D1/29; C11D1/62; C11D3/26; C11D3/28; C11D3/48

According to International Patent Classification (IPC) or to both national classification and IPC

**B. FIELDS SEARCHED**

Minimum documentation searched (classification system followed by classification symbols)

A01N33/12; A01N31/00; A01N31/02; A01N43/40; A01P1/00; A01P3/00; C11D1/14; C11D1/29; C11D1/62; C11D3/26; C11D3/28; C11D3/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY/MEDLINE/EMBASE/BIOSIS (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2014-91805 A (KAO CORPORATION) 19 May 2014 (2014-05-19)<br>examples 2, 3 | 1-4, 6, 7, 9, 10, 12-16 |
| Y | JUNKA, A. et al. Efficacy of antiseptics containing povidone-iodine, octenidine dihydrochloride and ethacridine lactate against biofilm formed by Pseudomonas aeruginosa and Staphylococcus aureus measured with the novel biofilm-oriented antiseptics test. International Wound Journal. 2013, vol. 11, no. 6, pp. 730-734, doi: 10.1111/iwj.12057<br>table 1 | 1-16 |
| Y | JP 2016-35009 A (KAO CORPORATION) 17 March 2016 (2016-03-17)<br>claims, examples 1, 2 | 1-16 |
| Y | JP 2021-127389 A (KAO CORPORATION) 02 September 2021 (2021-09-02)<br>paragraphs [0087], [0092] | 8,11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2024/011912**

**C. DOCUMENTS CONSIDERED TO BE RELEVANT**

| Category* | Citation of document, with indication, where appropriate, of the relevant passages | Relevant to claim No. |
|---|---|---|
| P, X | WO 2023/181062 A1 (UDAY DIDAR SINGH, Paul) 28 September 2023 (2023-09-28) paragraphs [0031]-[0040], [0056]-[0060] | 1-4, 7, 9, 12, 15, 16 |

Form PCT/ISA/210 (second sheet) (July 2022)

**INTERNATIONAL SEARCH REPORT**
**Information on patent family members**

International application No.
**PCT/JP2024/011912**

| Patent document cited in search report | Publication date (day/month/year) | Patent family member(s) | Publication date (day/month/year) |
|---|---|---|---|
| JP 2014-91805 A | 19 May 2014 | (Family: none) | |
| JP 2016-35009 A | 17 March 2016 | (Family: none) | |
| JP 2021-127389 A | 02 September 2021 | (Family: none) | |
| WO 2023/181062 A1 | 28 September 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5728667 B
- GB 1533952 B
- JP S52105228 A
- WO 2014100807 A


### Non-patent literature cited in the description


- *CHEMICAL ABSTRACTS*, 70775-75-6
- *J. Am. Oil Chem. Soc.*, 1992, vol. 69, 39